# EUROPEAN PATENT SPECIFICATION

(11) **EP 4 059 750 B1**
(45) Date of publication and mention of the grant of the patent: **07.06.2023**
(21) Application number: 22156764.7
(22) Date of filing: 15.02.2022
(51) Int. Cl.: B60J 3/04, E06B 3/67, E06B 9/24, G09G 3/00

(54) **DIMMING GLASS CONTROL DEVICE AND DIMMING CONTROL SYSTEM**
DIMMSCHEIBENSTEUERVORRICHTUNG UND DIMMSTEUERSYSTEM
DISPOSITIF DE COMMANDE DE VERRE DE GRADATION ET SYSTÈME DE COMMANDE DE GRADATION

(30) Priority: 17.03.2021 JP 2021043418
(43) Date of publication of application: 21.09.2022
(73) Proprietor: Yazaki Corporation, Tokyo (JP)
(72) Inventor: Katsumata, Kenichi, Shizuoka (JP); Goto, Jun, Shizuoka (JP)
(74) Representative: Grünecker Patent- und Rechtsanwälte PartG mbB

(56) References cited:
- WO-A1-2020/083562
- JP-A- 2018 177 054
- US-A1- 2020 033 687

## Description

### BACKGROUND OF THE INVENTION

### Technical Field

The present invention relates to a dimming glass control device for controlling a dimming glass, and a dimming control system including such a dimming glass control device.

### Background Art

Conventionally, dimming glasses with dimming films have been used e.g. for window glasses for a vehicle, wherein the dimming films have transmittances which are changed depending on application of an AC voltage (see e.g. Patent Document 1). According to this Patent Document 1, such a dimming glass is applied to a window glass for a vehicle, wherein a transmittance of the window glass is changed e.g. via user operation.

Patent Document 2 describes a composite pane such as for being arranged on a glass of a vehicle, for instance, a front glass or a roof glass. The composite pane includes a functional element, the transparency of which can be controlled by applying a respective voltage. The functional element is separated, by means of separation lines, into a plurality of adjacent segments (preferably arranged horizontally, i.e. parallel to the front roof edge of the vehicle). Transparency of the different segments can be switched independently, by applying the respective voltage individually.

Patent Document 3 describes variable transmittance control filters, wherein a switching material is disposed between two transparent substrates and in contact with first and second electrodes.

Patent Document 4 describes a dimming system for a visor of a moving body and a control method. A light control member is divided into a plurality of segments, wherein transmittance is changed for each of the segments.

### Citation List

### Patent Literature

Patent Document 1: JP 2015-160534A
Patent Document 2: WO 2020/083562 A1
Patent Document 3: US 2020/033867 A1
Patent Document 4: JP 2018-177054 A

### SUMMARY OF THE INVENTION

However, when a user wants to look out of the window and/or it is necessary to block someone's eyes from the outside and/or to prevent glares, a transmittance must be changed each and every time for the dimming glass as a window glass according to technologies such as Patent Document 1. Consequently, there is room for improvement of the user friendliness.

This is achieved by the features of a dimming glass control device according to claim 1. Preferred embodiments are claimed in the dependent claims.

A dimming control system according to a preferred embodiment includes: a dimming glass including a plurality of dimming films, wherein the plurality of dimming films is arranged in different regions of a window glass for a vehicle, wherein the plurality of dimming films has transmittances of light which are changed depending on application of an AC voltage; and the dimming glass control devie according to claim 1 configured to control the transmittances of the plurality of dimming films of the dimming glass.

According to the dimming glass control device, one dimming pattern is designated out of the plurality of dimming patterns which differs from each other in at least one of the number of dimming films or the position of a dimming film to which the AC voltage is applied (i.e. for which the transmittance is changed). Therefore, it is practically possible e.g. to preset, as one of the plurality of dimming patterns for designation, a dimming pattern in which part of the dimming films is transparent and the remaining dimming film(s) is non-transparent, in addition to dimming patterns e.g. with full non-transparency and/or full transparency. Furthermore, a user can designate such a dimming pattern in which part of the dimming films is transparent and the remaining dimming film(s) are non-transparent, which enables the blocking effect and the visibility of the outside to be simultaneously achieved to a certain extent without changing the transmittance each time once the designation has been made. Of course, it is also possible to designate the dimming pattern with full non-transparency when full blocking is desired, while the dimming pattern with full transparency can be designated when a full visibility of the outside is desired. In this manner, the dimming glass control device as described above enables the dimming glass to be controlled while improving the user friendliness.

### BRIEF DESCRIPTION OF THE DRAWINGS

Fig. 1 is a schematic block diagram illustrating a dimming control system including a dimming glass control device according to a first embodiment;
Fig. 2 is a schematic sectional view of a dimming glass according to Fig. 1 along the line V11-V11;
Fig. 3 shows how a dimming control is performed for the dimming glass according to Figs. 1 and 2;
Fig. 4 is a schematic view illustrating five dimming patterns which are set in a control section according to Fig. 1;
Fig. 5 is a schematic flowchart illustrating a flow of a control process which is performed in the dimming glass control device according to Fig. 1;
Fig. 6 is a schematic block diagram illustrating a dimming control system including a dimming glass control device according to a second embodiment;
Fig. 7 is a schematic flowchart illustrating a flow of a control process which is performed in the dimming glass control device according to Fig. 6;
Fig. 8 is a schematic block diagram illustrating a dimming control system including a dimming glass control device according to a third embodiment;
Fig. 9 is a schematic view illustrating a dimming glass according to Fig. 8, together with a sectional view along the line V31-V31 in Fig. 8;
Fig. 10 schematically shows four types of dimming pattern which may be set for the dimming glass according to Fig. 8; and
Fig. 11 is a schematic flowchart illustrating a flow of a control process which is performed in the dimming glass control device according to Fig. 8.

### DETAILED DESCRIPTION OF THE PREFERRED EMBODIMENTS

Hereinafter, embodiments of a dimming glass control device and a dimming control system will be described. First, a first embodiment will be described.

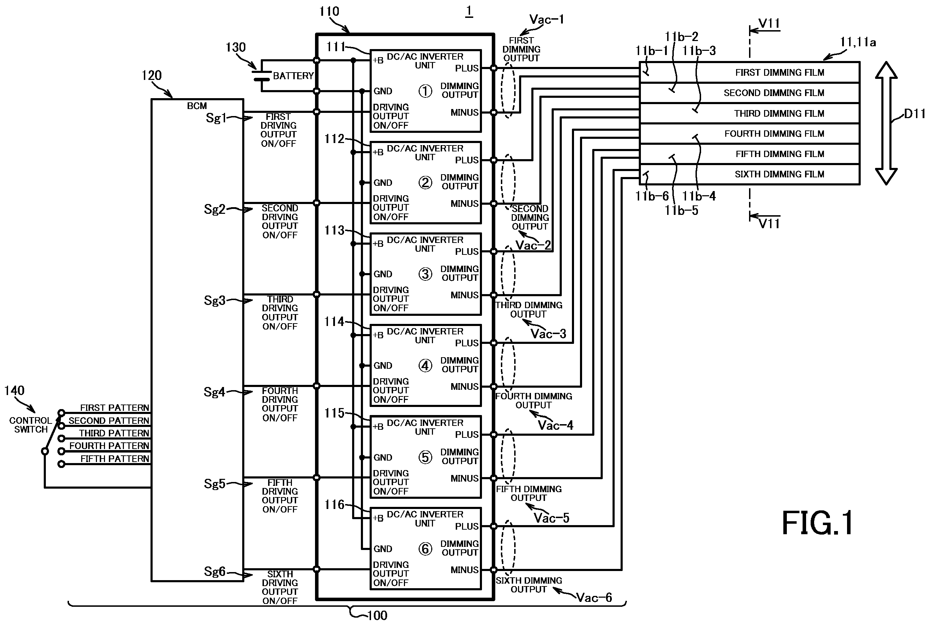

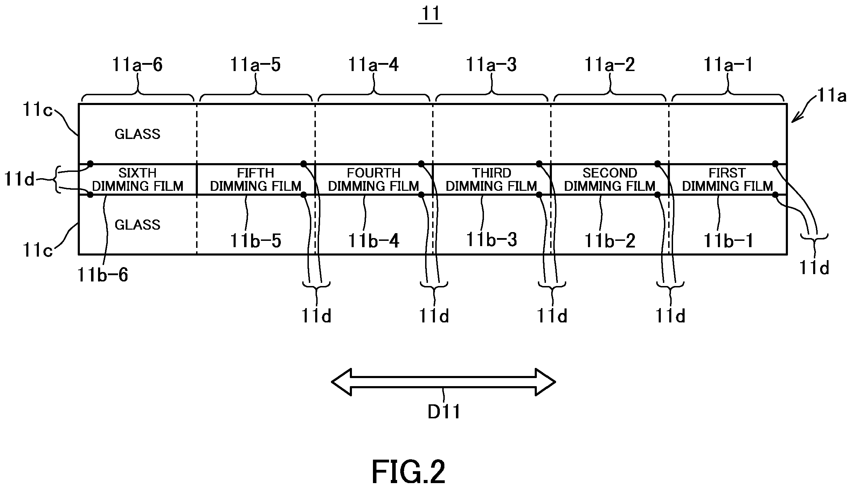

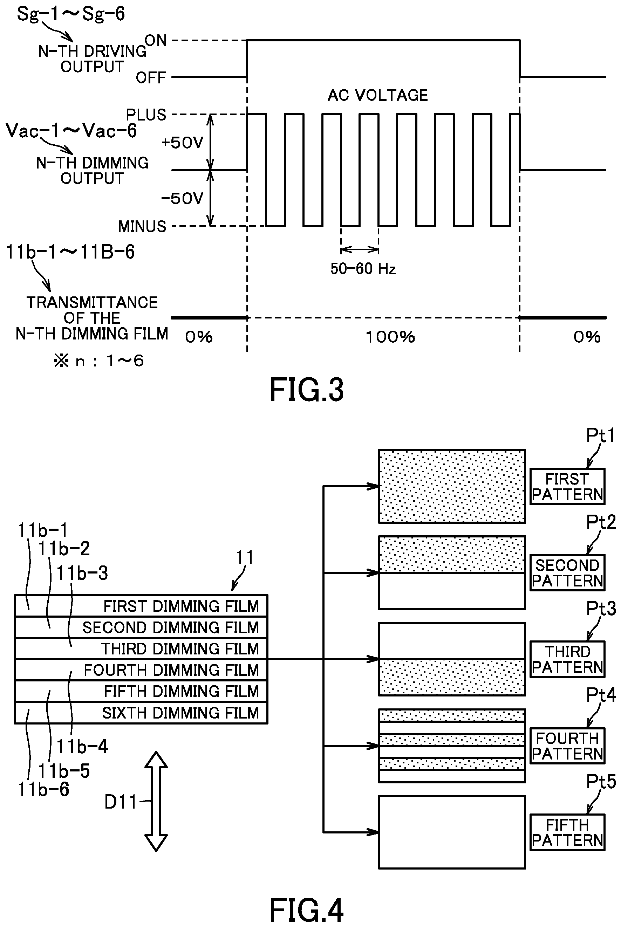

Fig. 1 shows a schematic block diagram illustrating a dimming control system including a dimming glass control device according to a first embodiment. Further, Fig. 2 shows a schematic sectional view of a dimming glass according to Fig. 1 along the line V11-V11, and Fig. 3 shows how a dimming control is performed for the dimming glass according to Figs. 1 and 2.

The dimming control system 1 according to Fig. 1 includes a dimming glass 11 and a dimming glass control device 100.

As shown in Figs. 1 and 2, the dimming glass 11 includes first to sixth dimming films 11b-1 to 11b-6 which are arranged in first to sixth regions 11a-1 to 11a-6 of a window glass 11a for a vehicle. The first dimming film 11b-1 is arranged in the first region 11a-1, the second dimming film 11b-2 is arranged in the second region 11a-2, and the third dimming film 11b-3 is arranged in the third region 11a-3. Further, the fourth dimming film 11b-4 is arranged in the fourth region 11a-4, the fifth dimming film 11b-5 is arranged in the fifth region 11a-5, and the sixth dimming film 11b-6 is arranged in the sixth region 11a-6. The window glass 11a for mounting the first to sixth dimming films 11b-1 to 11b-6 thereto is not limited here. However, the dimming films 11b-1 to 11b-6 may be arranged on a door glass of a side door and/or a rear glass of a rear window of the vehicle, for example.

The first to sixth regions 11a-1 to 11a-6 of the window glass 11a are six regions extending in an elongate shape in different positions, wherein these regions are obtained by dividing the window glass 11a into six regions in an up-down direction D11 of the vehicle. Then, the first to sixth dimming films 11b-1 to 11b-6 are arranged in the first to sixth regions 11a-1 to 11a-6 so as to be interposed between two glass panes 11c. Furthermore, a pair of electric wires 11d is connected to each of the first to sixth dimming films 11b-1 to 11b-6, wherein the pair of electric wires 11d serves for applying an AC voltage to each of the dimming films. The first to sixth dimming films 11b-1 to 11b-6 are film elements having transmittances of light which are changed depending on the AC voltage applied via the respective pairs of electric wires 11d.

Fig. 3 shows how the transmittances for the first to sixth dimming films 11b-1 to 11b-6 are changed depending on application of the AC voltage. It is to be noted that the first to sixth dimming films 11b-1 to 11b-6 in Fig. 3 are film elements with the same characteristics and are indicated as the n-th dimming film by abstracting their numbers. Furthermore, the AC voltage which is applied for changing the transmittance for the n-th dimming film shall be referred to as the n-th dimming output, and an instruction signal for instructing application of the n-th dimming output to the n-th dimming film shall be referred to as the n-th driving output. The n-th driving output is a binary signal having on/off values, wherein the n-th dimming output which is an AC voltage of ± 50 V and 50 Hz to 60 Hz is applied to the n-th dimming film in response to the n-th driving output having an on-value. Further, according to the present embodiment, the transmittance for the n-th dimming film is substantially 0 % without application of the n-th dimming output, while the transmittance for the n-th dimming film is substantially 100 % when applying the n-th dimming output thereto. This means that the n-th dimming film is non-transparent and blocks light without application of the n-th dimming output, and is transparent and allows light through the n-th dimming film when applying the n-th dimming output thereto.

The dimming glass control device 100 according to Fig. 1 is configured to control the transmittances for the first to sixth dimming films 11b-1 to 11b-6 of the dimming glass 11 which has the above-described configuration. The dimming glass control device 100 includes a voltage applying section 110, a control section 120, a battery 130 and a control switch 140.

The voltage applying section 110 changes the transmittance for each of the first to sixth dimming films 11b-1 to 11b-6 of the dimming glass 11 between two values of substantially 0 % and substantially 100% by application and non-application of the respective first to sixth dimming outputs Vac-1 to Vac-6 to the dimming films. The voltage applying section 110 according to the present embodiment further includes first to sixth AC voltage generating sections 111 to 116 configured to generate the first to sixth dimming outputs Vac-1 to Vac-6. These first to sixth AC voltage generating sections 111 to 116 are associated with the first to sixth dimming films 11b-1 to 11b-6 in a one-to-one manner. Furthermore, all of the first to sixth AC voltage generating sections 111 to 116 are configured as DC/AC inverters which convert a DC voltage of the battery 130 into an AC voltage as shown in Fig. 3. The first to sixth AC voltage generating sections 111 to 116 are connected to the first to sixth dimming films 11b-1 to 11b-6 via the electric wires 11d as shown in Fig. 3 so that the AC voltage generating sections 111 to 116 can apply the first to sixth dimming outputs Vac-1 to Vac-6 to the dimming films 11b-1 to 11b-6.

The control section 120 is configured to control the voltage applying section 110. According to the present embodiment, a BCM (Body Control Module) installed in the vehicle functions as the control section 120. The control section 120 provides first to sixth driving outputs Sg1 to Sg6 to the first to sixth AC voltage generating sections 111 to 116 of the voltage applying section 110 to control a voltage output of each of the AC voltage generating sections, wherein the first to sixth driving outputs Sg1 to Sg6 are binary signals having on/off values. One or more AC voltage generating sections which have received the driving output having an on-value from the control section 120 provides the dimming output in the form of an AC voltage to the associated dimming film(s).

According to the present embodiment, five dimming patterns as described below are set in the control section 120, wherein the five dimming patterns differ from each other in at least one of the number of dimming films or a position of a dimming film to which the dimming output (AC voltage) is applied. The control section 120 receives designation of one dimming pattern of the first to fifth patterns from the control switch 140, and controls the voltage applying section 110 so as to apply the dimming output to one or more dimming films associated with the one designated dimming pattern. This means that the control section 120 provides the driving output having an on-value to one or more AC voltage generating sections which are connected to one or more dimming films associated with the one designated dimming pattern.

Fig. 4 schematically shows the five dimming patterns which are set in the control section according to Fig. 1.

In the control section 120, five dimming patterns as shown in this Figure 4, i.e. first to fifth patterns Pt1 to Pt5 are set.

First, the first pattern Pt1 is a non-dimming pattern in which the first to sixth dimming outputs Vac-1 to Vac-6 are not applied to any of the first to sixth dimming films 11b-1 to 11b-6. In the non-dimming pattern according to the present embodiment, all of the first to sixth dimming films 11b-1 to 11b-6 are non-transparent, wherein light is blocked across the entire dimming glass 11.

The fifth pattern Pt5 is a full dimming pattern in which the first to sixth dimming outputs Vac-1 to Vac-6 are applied to all of the first to sixth dimming films 11b-1 to 11b-6. In the full dimming pattern according to the present embodiment, all of the first to sixth dimming films 11b-1 to 11b-6 are transparent, wherein light is allowed to pass through the entire dimming glass 11.

The second pattern Pt2 and third pattern Pt3 are continuous dimming patterns in which the dimming output is applied to a continuous film group, the continuous film group being formed by two or more of the first to sixth dimming films 11b-1 to 11b-6 which are arranged continuously. In the continuous dimming patterns according to the present embodiment, dimming films forming the continuous film group are transparent, while the remaining dimming film(s) is non-transparent. Furthermore, the second pattern Pt2 and third pattern Pt3 differ from each other in at least one of the number of dimming films and a position(s) of a dimming film(s) forming the continuous film group (only in a position(s) of a dimming film(s) according to the present embodiment). This means that two continuous dimming patterns are provided according to the present embodiment.

In the second pattern Pt2, the dimming output is applied to the fourth to sixth dimming films 11b-4 to 11b-6 which are located in a lower half of the dimming glass 11 with respect to the up-down direction D11 so that the fourth to sixth dimming film 11b-4 to 11b-6 are transparent. In the second pattern Pt2, no dimming output is applied to the remaining first to third dimming films 11b-1 to 11b-3, wherein an upper half of the dimming glass 11 is non-transparent.

In the third pattern Pt3, the dimming output is applied to the first to third dimming films 11b-1 to 11b-3 which are located in the upper half of the dimming glass 11 so that the first to third dimming film 11b-1 to 11b-3 are transparent. Further, in the third pattern Pt3, no dimming output is applied to the remaining fourth to sixth dimming films 11b-4 to 11b-6, wherein the lower half of the dimming glass 11 is non-transparent.

The fourth pattern Pt4 is a discontinuous dimming pattern as covered by the subject-matter of claim 1 and in which the dimming output is applied to a discontinuous film group, the discontinuous film group being formed by two or more of the first to sixth dimming films 11b-1 to 11b-6 which are arranged discontinuously with another dimming film interposed therebetween, wherein no voltage is applied to the another dimming film. The discontinuous dimming pattern according to the present embodiment is configured such that the dimming output is applied to the second dimming film 11b-2, fourth dimming film 11b-4 and sixth dimming film 11b-6. In this discontinuous dimming pattern, no voltage is applied to the remaining first dimming film 11b-1, third dimming film 11b-3 and fifth dimming film 11b-5. By voltage application to every second dimming film, the fourth pattern Pt4 is a pattern of horizontal stripes which is formed by alternating transparent and non-transparent regions in the up-down direction D11, the transparent and non-transparent regions having a horizontal belt shape. According to the present embodiment, only one pattern, i.e. the fourth pattern Pt4 as shown, is set as the discontinuous dimming pattern as described above.

The battery 130 is an on-board DC power supply for a vehicle, wherein a DC voltage is provided from this battery 130 to each of the first to sixth AC voltage generating sections 111 to 116 of the voltage applying section 110. Each of the AC voltage generating section converts this DC voltage into an AC voltage as described above.

The control switch 140 is a section which receives a switchable selecting operation of a dimming pattern by a user of the dimming control system 1 and the dimming glass control device 100 and designates the received dimming pattern to the control section 120, wherein the user is a passenger of the vehicle. According to the present embodiment, the user selects one dimming pattern of the first to fifth patterns Pt1 to Pt5 as described with reference to Fig. 4, via the control switch 140. A selection result via this control switch 140 is designated to the control section 120, wherein the control section 120 provides the driving output with an on-value to one or more AC voltage generating sections which are connected to one or more dimming films associated with the one designated dimming pattern. In the voltage applying section 110, one or more AC voltage generating sections which have received the driving output from the control section 120 apply the AC voltage as the dimming output to the associated dimming film(s), wherein the designated dimming pattern is obtained in the dimming glass 11 by this voltage application.

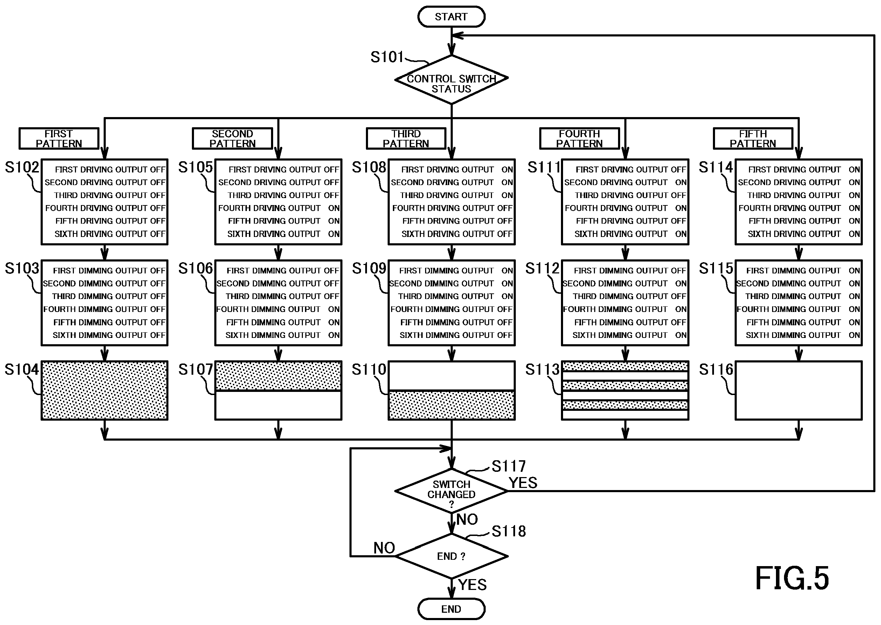

Fig. 5 shows a schematic flowchart illustrating a flow of a control process which is performed in the dimming glass control device according to Fig. 1.

The control process as shown in this flowchart is started by switching the power supply to the dimming glass control device 100. Once the process has been started, it is first determined in the control section 120 to which of the first to fifth patterns Pt1 to Pt5 the control switch 140 is set (step S101).

If the control switch 140 is set to the first pattern Pt1, the control section 120 sets all of the first to sixth driving outputs Sg1 to Sg6 for the first to sixth AC voltage generating sections 111 to 116 to an off-state (step S102). In this manner, all of the first to sixth dimming outputs Vac-1 to Vac-6 are switched off in the voltage applying section 110 (step S103). As a result, the dimming glass 11 is set to the first pattern Pt1 in which all of the first to sixth dimming films 11b-1 to 11b-6 are non-transparent (step S104).

If the control switch 140 is set to the second pattern Pt2, the control section 120 sets the first to third driving outputs Sg1 to Sg3 for the first to third AC voltage generating sections 111 to 113 to an off-state (step S105). In the step S105, the control section 120 further sets the fourth to sixth driving outputs Sg4 to Sg6 for the fourth to sixth AC voltage generating sections 114 to 116 to an on-state. In this manner, the first to third dimming outputs Vac-1 to Vac-3 are switched off, while the fourth to sixth dimming outputs Vac-4 to Vac-6 are switched on (step S106). As a result, the dimming glass 11 is set to the second pattern Pt2 in which the first to third dimming films 11b-1 to 11b-3 are non-transparent, wherein the fourth to sixth dimming films 11b-4 to 11b-6 are transparent (step S107).

If the control switch 140 is set to the third pattern Pt3, the control section 120 sets the first to third driving outputs Sg1 to Sg3 for the first to third AC voltage generating sections 111 to 113 to an on-state (step S108). In the step S108, the control section 120 further sets the fourth to sixth driving outputs Sg4 to Sg6 to an off-state. In this manner, the first to third dimming outputs Vac-1 to Vac-3 are switched on, while the fourth to sixth dimming outputs Vac-4 to Vac-6 are switched off (step S109). As a result, the dimming glass 11 is set to the third pattern Pt3 in which the first to third dimming films 11b-1 to 11b-3 are transparent, wherein the fourth to sixth dimming films 11b-4 to 11b-6 are non-transparent (step S110).

If the control switch 140 is set to the fourth pattern Pt4, the control section 120 performs the following on/off-setting (step S111): the control section 120 sets the first driving output Sg1, third driving output Sg3 and fifth driving output Sg5 for the first AC voltage generating section 111, third AC voltage generating section 113 and fifth AC voltage generating section 115 to an off-state. The control section 120 further sets the second driving output Sg2, fourth driving output Sg4 and sixth driving output Sg6 for the second AC voltage generating section 112, fourth AC voltage generating section 114 and sixth AC voltage generating section 116 to an on-state. In this manner, the first dimming output Vac-1, third dimming output Vac-3 and fifth dimming output Vac-5 are switched off, while the second dimming output Vac-2, fourth dimming output Vac-4 and sixth dimming output Vac-6 are switched on (step S112). As a result, the dimming glass 11 is set to the fourth dimming pattern Pt4 (step S113) in which the first dimming film 11b-1, third dimming film 11b-3 and fifth dimming film 11b-5 are non-transparent, while the second dimming film 11b-2, fourth dimming film 11b-4 and sixth dimming film 11b-6 are transparent.

If the control switch 140 is set to the fifth pattern Pt5, the control section 120 sets all of the first to sixth driving outputs Sg1 to Sg6 for the first to sixth AC voltage generating sections 111 to 116 to an on-state (step S114). In this manner, all of the first to sixth dimming outputs Vac-1 to Vac-6 are switched on (step S115), wherein the dimming glass 11 is set to the fifth pattern Pt5 in which all of the first to sixth dimming films 11b-1 to 11b-6 are transparent (step S116).

After the dimming glass 11 is set to one dimming pattern in this manner, the control section 120 determines whether a switch change for switching the dimming pattern to another pattern has been carried out at the control switch 140 (step S117). If the switch change has been carried out (YES-determination in step S117), the process returns to step S101 and the following processes are repeated. If the switch change has not been carried out (NO-determination in step S117), the control section 120 determines whether it has been instructed that the process should be ended by a power supply shutdown (step S118). If such ending is not instructed (NO-determination in step S118), the process returns to step S117 and the following process is repeated. If the ending has been instructed (YES-determination in step S118), the control section 120 ends the control process according to this flowchart.

The dimming glass control device 100 and the dimming control system 1 according to the first embodiment as described above is provided such that one dimming pattern is designated out of the five dimming patterns as described above, i.e. the first to fifth patterns Pt1 to Pt5. The user can designate a dimming pattern, such as the second to fourth patterns Pt2 to Pt4, in which part of the dimming glass 11 is transparent and the remainder of the dimming glass 11 is non-transparent, so that after the designation, the blocking effect and the visibility of the outside can be simultaneously achieved to a certain extent without changing the transmittance each time. Of course, it is also possible to designate the first dimming pattern Pt1 with full non-transparency when full blocking is desired, while the fifth dimming pattern Pt5 with full transparency can be designated when a full visibility of the outside is desired. In this manner, the dimming glass control device 100 and dimming control system 1 according to the present embodiment enables the dimming glass 11 to be controlled while improving the user friendliness.

According to the present embodiment, as selectable dimming patterns, five dimming patterns are provided which includes all of the following first to fifth patterns Pt1 to Pt5:
the first pattern Pt1 is a full dimming pattern in which the AC voltage is applied to all of six dimming films, i.e. the first to sixth dimming films 11b-1 to 11b-6. The second pattern Pt2 and third pattern Pt3 are two continuous dimming patterns in which the AC voltage is applied to a continuous film group which is formed by two or more dimming films arranged continuously, wherein the patterns Pt2 and Pt3 differ from each other in that each of the two continuous film groups includes dimming films in different positions in the up-down direction. The fourth pattern Pt4 is one discontinuous dimming pattern as covered by the subject-matter of claim 1 and in which the AC voltage is applied to a discontinuous film group, the discontinuous film group being formed by two or more dimming films which are arranged discontinuously with another dimming film interposed therebetween, wherein no voltage is applied to the another dimming film. The fifth pattern Pt5 is a non-dimming pattern in which the AC voltage is not applied to any of the six dimming films. The full dimming pattern, non-dimming pattern, continuous dimming patterns and discontinuous dimming pattern according to the above-described configuration can be achieved with a plurality of dimming films (six dimming films according to the present embodiment), and are expected to be designated by a user with a high likelihood. According to the configuration as described above, at least one dimming pattern of such dimming patterns (all dimming patterns according to the present embodiment) is set as a dimming pattern for designation, which enables the user friendliness to be further improved.

Further, according to the present embodiment, the control section 120 is configured such that one dimming pattern of the first to fifth dimming patterns Pt1 to Pt5 is designated via operation of the control switch 140 by a passenger of the vehicle so as to be switchable. This configuration is preferable since it enables the dimming patterns to be easily changed via operation of the passenger.

Furthermore, according to the present embodiment, the voltage applying section 110 includes the first to sixth AC voltage generating sections 111 to 116 which are associated with the first to sixth dimming film 11b-1 to 11b-6 in a one-to-one manner. The control section 120 controls the first to sixth AC voltage generating sections 111 to 116 in such a manner that only one or more of the first to sixth AC voltage generating sections 111 to 116 associated with the one designated dimming pattern generate the AC voltage. According to this configuration, six AC voltage generating sections are provided which are associated with the dimming films arranged on the dimming glass 11 in a one-to-one manner, which enables application of the AC voltage to the dimming films to be accomplished with high accuracy while suppressing e.g. mechanical operation errors.

The description of the first embodiment shall be ended here, and next, a second embodiment will be described. The second embodiment is an exemplary variation of the first embodiment. The second embodiment differs from the first embodiment in configuration of the voltage applying section and corresponding operation of the control section. The description of the second embodiment below will be focused on differences from the first embodiment.

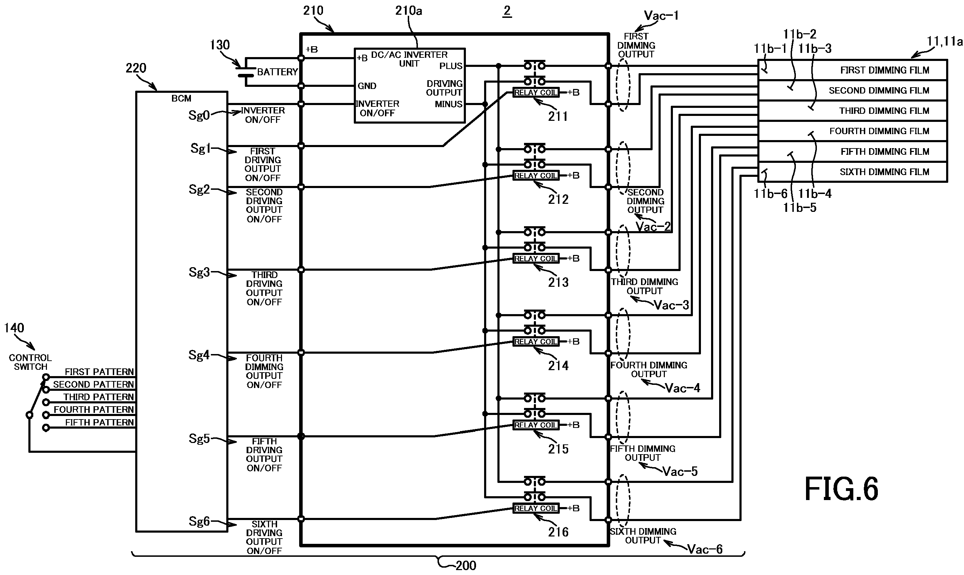

Fig. 6 shows a schematic block diagram of a dimming control system including a dimming glass control device according to the second embodiment. It is to be noted that in Fig. 6, similar elements to those according to the first embodiments as shown in Fig. 1 are indicated with the same reference signs as those used in Fig. 1, and the description of these similar elements will be omitted below.

In a dimming glass control device 200 of a dimming control system 2 according to the present embodiment, a voltage applying section 210 includes one AC voltage generating section 210a and first to sixth relays 211 to 216. The AC voltage generating section 210a converts a DC voltage from a battery 130 into an AC voltage. The first to sixth relays 211 to 216 are associated with first to sixth dimming films 11b-1 to 11b-6 in a one-to-one manner, and connect each of the six dimming films to the AC voltage generating section 210a.

Further, a control section 220 first outputs an inverter signal Sg0 for instructing operation of the one AC voltage generating section 210a of the voltage applying section 210. Then, the control section 220 controls the first to sixth relays 211 to 216 in such a manner that only one or more of the relays 211 to 216 associated with the one dimming pattern which has been designated via a control switch 140 are switched to a conductive state. More specifically, the control section 220 provides a driving output to a relay coil of a relay associated with the one dimming pattern in order to cause a contact of the relay to be closed to which the driving output has been provided. With such a control, a dimming output in the form of AC voltage from the AC voltage generating section 210a is applied to a dimming film(s) connected to a conductive relay(s) so that the one designated dimming pattern is achieved in the dimming glass 11.

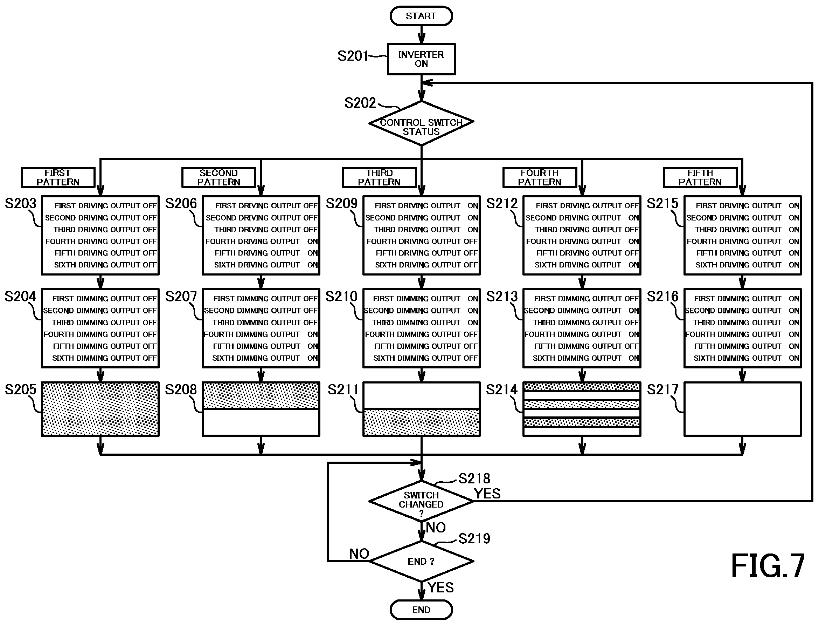

Fig. 7 is a schematic flowchart illustrating a flow of a control process which is performed in the dimming glass control device according to Fig. 6.

The control process as shown in this flowchart is started by switching the power supply to the dimming glass control device 200. Once the process has been started, first, the control section 220 provides the inverter signal Sg0 to the AC voltage generating section 210a of the voltage applying section 210 to start its generating operation of the AC voltage (step S201). Next, it is determined in the control section 220 to which of the first to fifth patterns Pt1 to Pt5 the control switch 140 is set (step S202).

If the control switch 140 is set to the first pattern Pt1, the control section 220 sets all of the first to sixth driving outputs Sg1 to Sg6 for the first to sixth relays 211 to 216 to an off-state (step S203). In this manner, all of the first to sixth dimming outputs Vac-1 to Vac-6 are switched off in the voltage applying section 210 (step S204). As a result, the dimming glass 11 is set to the first pattern Pt1 in which all of the first to sixth dimming films 11b-1 to 11b-6 are non-transparent (step S205).

If the control switch 140 is set to the second pattern Pt2, the control section 220 sets the first to third driving outputs Sg1 to Sg3 for the first to third relays 211 to 213 to an off-state (step S206). In the step S206, the control section 220 further sets the fourth to sixth driving outputs Sg4 to Sg6 for the fourth to sixth relays 214 to 216 to an on-state. In this manner, the first to third dimming outputs Vac-1 to Vac-3 are switched off via the relays, while the fourth to sixth dimming outputs Vac-4 to Vac-6 are switched on (step S207). As a result, the dimming glass 11 is set to the second pattern Pt2 in which the first to third dimming films 11b-1 to 11b-3 are non-transparent, wherein the fourth to sixth dimming films 11b-4 to 11b-6 are transparent (step S208).

If the control switch 140 is set to the third pattern Pt3, the control section 220 sets the first to third driving outputs Sg1 to Sg3 for the first to third relays 211 to 213 to an on-state (step S209). In the step S209, the control section 220 further sets the fourth to sixth driving outputs Sg4 to Sg6 for the fourth to sixth relays 214 to 216 to an off-state. In this manner, the first to third dimming outputs Vac-1 to Vac-3 are switched on via the relays, while the fourth to sixth dimming outputs Vac-4 to Vac-6 are switched off (step S210). As a result, the dimming glass 11 is set to the third pattern Pt3 in which the first to third dimming films 11b-1 to 11b-3 are transparent, wherein the fourth to sixth dimming films 11b-4 to 11b-6 are non-transparent (step S211).

If the control switch 140 is set to the fourth pattern Pt4, the control section 220 performs the following on/off-setting (step S212): the control section 220 sets the first driving output Sg1, third driving output Sg3 and fifth driving output Sg5 for the first relay 211, third relay 213 and fifth relay 215 to an off-state. The control section 220 further sets the second driving output Sg2, fourth driving output Sg4 and sixth driving output Sg6 for the second relay 212, fourth relay 214 and sixth relay 216 to an on-state. In this manner, the first dimming output Vac-1, third dimming output Vac-3 and fifth dimming output Vac-5 are switched off via the relays, while the second dimming output Vac-2, fourth dimming output Vac-4 and sixth dimming output Vac-6 are switched on (step S213). As a result, the dimming glass 11 is set to the fourth dimming pattern Pt4 (step S214) in which the first dimming film 11b-1, third dimming film 11b-3 and fifth dimming film 11b-5 are non-transparent, while the second dimming film 11b-2, fourth dimming film 11b-4 and sixth dimming film 11b-6 are transparent.

If the control switch 140 is set to the fifth pattern Pt5, the control section 220 sets all of the first to sixth driving outputs Sg1 to Sg6 for the first to sixth relays 211 to 216 to an on-state (step S215). In this manner, all of the first to sixth dimming outputs Vac-1 to Vac-6 are switched on via the relays (step S216). Then, the dimming glass 11 is set to the fifth pattern Pt5 in which all of the first to sixth dimming films 11b-1 to 11b-6 are non-transparent (step S217).

After the dimming glass 11 is set to one dimming pattern in this manner, the control section 220 determines whether a switch change for switching the dimming pattern to another pattern has been carried out at the control switch 140 (step S218). If the switch change has been carried out (YES-determination in step S218), the process returns to step S202 and the following processes are repeated. If the switch change has not been carried out (NO-determination in step S218), the control section 220 determines whether it has been instructed that the process should be ended by a power supply shutdown (step S219). If such ending is not instructed (NO-determination in step S219), the process returns to step S218 and the following process is repeated. If the ending has been instructed (YES-determination in step S219), the control section 220 ends the control process according to this flowchart.

Of course, the dimming glass control device 200 and dimming control system 2 according to the second embodiment as described above enables the dimming glass 11 to be controlled while improving the user friendliness in a similar manner to the first embodiment.

According to the present embodiment, the voltage applying section 210 includes six relays and one AC voltage generating section 210a configured to output the AC voltage, wherein the six relays are associated with the six dimming films in a one-to-one manner and configured to connect each of the six dimming films to the AC voltage generating section 210a. The control section 220 controls the relays in such a manner that only one or more of the relays associated with one designated dimming pattern are switched to a conductive state. With such configuration, the number of AC voltage generating sections 210a to be installed is limited which are formed by DC/AC inverters with tendency to be expensive, i.e., only one AC voltage generating section 210a is necessary, and application of the AC voltage to the six dimming films is accomplished by the relays which are less expensive than the AC voltage generating section 210a. With such relays, it is possible to construct the dimming glass control device 200 while suppressing the costs.

Next, a third embodiment will be described.

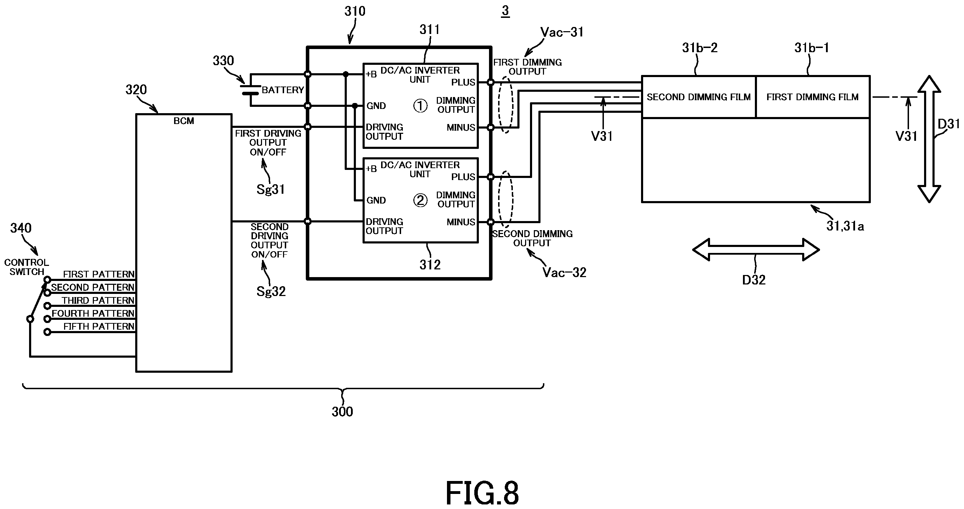

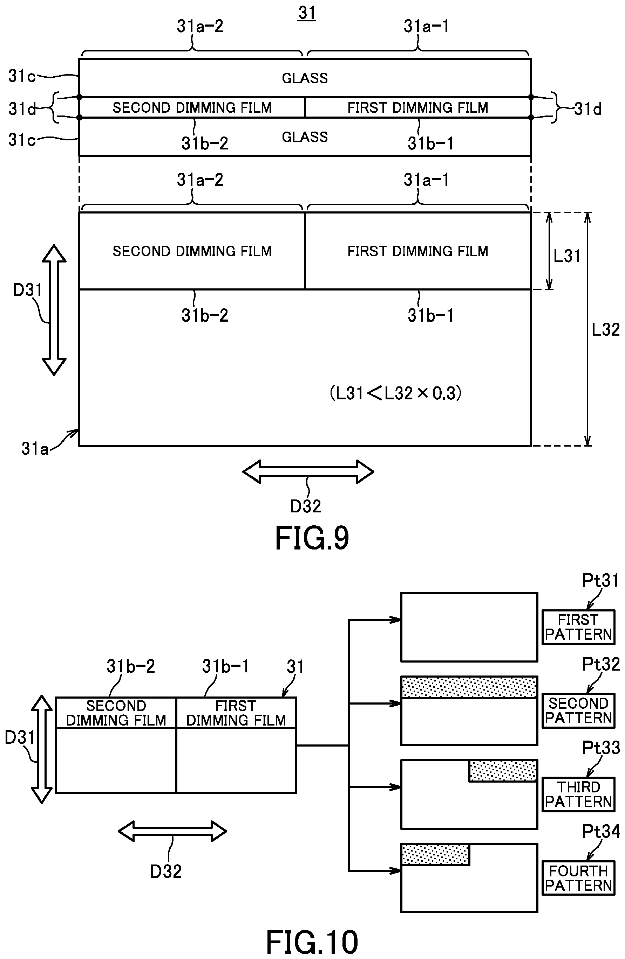

Fig. 8 shows a schematic block diagram of a dimming control system including a dimming glass control device according to a third embodiment. Further, Fig. 9 schematically shows a dimming glass according to Fig. 8, together with a sectional view along the line V31-V31 in Fig. 8.

In a dimming control system 3 as shown in Fig. 8, a dimming glass 31 includes two dimming films positioned on a windshield 31a of a vehicle on its upper end side in an up-down direction D31 as shown in Figs. 8 and 9, wherein the two dimming films are arranged in a vehicle width direction D32. A first dimming film 31b-1 of the two dimming films is positioned in a first region 31a-1, and a second dimming film 31b-2 of the two dimming films is positioned in a second region 31a-2, wherein the first region 31a-1 and second region 31a-2 are intended to be located on a driver seat side and a passenger seat side when seen from the inside of the vehicle cabin, respectively. According to the present embodiment, the first region 31a-1 and second region 31a-2, and thus, the first dimming film 31b-1 and second dimming film 31b-2 have a vertical width L31 in the up-down direction D31 which is smaller than a vertical width L32 of the windshield 31a multiplied by 0.3. In this manner, the dimming glass 31 is configured such that a front field of view for passengers may not be blocked even when the both of the first dimming film 31b-1 and second dimming film 31b-2 are non-transparent.

Such first dimming film 31b-1 and second dimming film 31b-2 are arranged in the first region 31a-1 and second region 31a-2 so as to be interposed between two glass panes 31c. Furthermore, a pair of electric wires 31d is connected to each of the dimming film 31b-1 and second dimming film 31b-2, wherein the pair of electric wires 31d serves for applying an AC voltage to each of the dimming films. The first dimming film 31b-1 and second dimming film 31b-2 are film elements having transmittances of light which are changed depending on the AC voltage applied via the respective pairs of electric wires 31d.

Further, according to the present embodiment, a voltage applying section 310 and a control section 320 are configured with the two dimming films in such a manner that the four following dimming patterns can be set for the dimming glass 31:

Fig. 10 schematically shows four types of dimming pattern which may be set for the dimming glass according to Fig. 8.

First, a first pattern Pt31 is a full dimming pattern in which the AC voltage is applied to all of the first dimming film 31b-1 and second dimming film 31b-2. In the full dimming pattern according to the present embodiment, all of the first dimming film 31b-1 and second dimming film 31b-2 are transparent.

A second pattern Pt32 is a non-dimming pattern in which the AC voltage is not applied to any of the first dimming film 31b-1 and second dimming film 31b-2. In the non-dimming pattern according to the present embodiment, all of the first dimming film 31b-1 and second dimming film 31b-2 are non-transparent, wherein the windshield 31a is blocked on its upper end side across the entire width in the vehicle width direction D32.

A third pattern Pt33 is a passenger seat side dimming pattern in which the AC voltage is applied to the second dimming film 31b-2 which is located on the passenger seat side. In the passenger seat side dimming pattern according to the present embodiment, the second dimming film 31b-2 on the passenger seat side is transparent while the first dimming film 31b-1 on the driver seat side is non-transparent, wherein the windshield 31a is blocked on its upper end side and on the driver seat side.

A fourth pattern Pt34 is a driver seat side dimming pattern in which the AC voltage is applied to the first dimming film 31b-1 which is located on the driver seat side. In the driver seat side dimming pattern according to the present embodiment, the first dimming film 31b-1 on the driver seat side is transparent while the second dimming film 31b-2 on the passenger seat side is non-transparent, wherein the windshield 31a is blocked on its upper end side and on the passenger seat side.

The voltage applying section 310 according to Fig. 8 includes a first AC voltage generating section 311 and a second AC voltage generating section 312 which are associated with the first dimming film 31b-1 and second dimming film 31b-2 on the dimming glass 31 in a one-to-one manner. Both of the first AC voltage generating section 311 and second AC voltage generating section 312 are configured as DC/AC inverters which convert a DC voltage of a battery 330 into an AC voltage. The first AC voltage generating section 311 and second AC voltage generating section 312 are connected to the first dimming film 31b-1 and second dimming film 31b-2 via the electric wires 31d as shown in Fig. 9 so that the AC voltage generating sections 311 and 312 can apply the first dimming output Vac-31 and a second dimming output Vac-32 to the dimming films 31b-1 and 31b-2.

Further, the control section 320 is configured to control the voltage applying section 310. Similarly to the control section 120 according to the first embodiment, a BCM installed in the vehicle functions as the control section 320 according to the present embodiment. The control section 320 provides a first driving output Sg31 and a second driving output Sg32 to the first AC voltage generating section 311 and second AC voltage generating section 312 of the voltage applying section 310 to control a voltage output of each of the AC voltage generating sections, wherein the first driving output Sg31 and second driving output Sg32 are binary signals having on/off values.

Similarly to the first embodiment, the battery 330 is an on-board DC power supply for a vehicle, wherein a DC voltage is provided from this battery 330 to each of the first AC voltage generating section 311 and second AC voltage generating section 312 of the voltage applying section 310. Each of the AC voltage generating section converts this DC voltage into an AC voltage as described above.

A control switch 340 is a section which receives a switchable selecting operation of a dimming pattern by a user and designates the received dimming pattern to the control section 320 similarly to the first embodiment, wherein the user is a passenger of the vehicle. According to the present embodiment, the user selects one dimming pattern of the first to fourth patterns Pt31 to Pt34 as described with reference to Fig. 10, via the control switch 340. A selection result via this control switch 340 is designated to the control section 320, wherein the control section 320 provides the driving output with an on-value to one or more AC voltage generating sections which are connected to one or more dimming films associated with the one designated dimming pattern. In the voltage applying section 310, one or more AC voltage generating sections which have received the driving output from the control section 320 applies the AC voltage as the dimming output to the associated dimming film(s), wherein the designated dimming pattern is obtained in the dimming glass 31 by this voltage application.

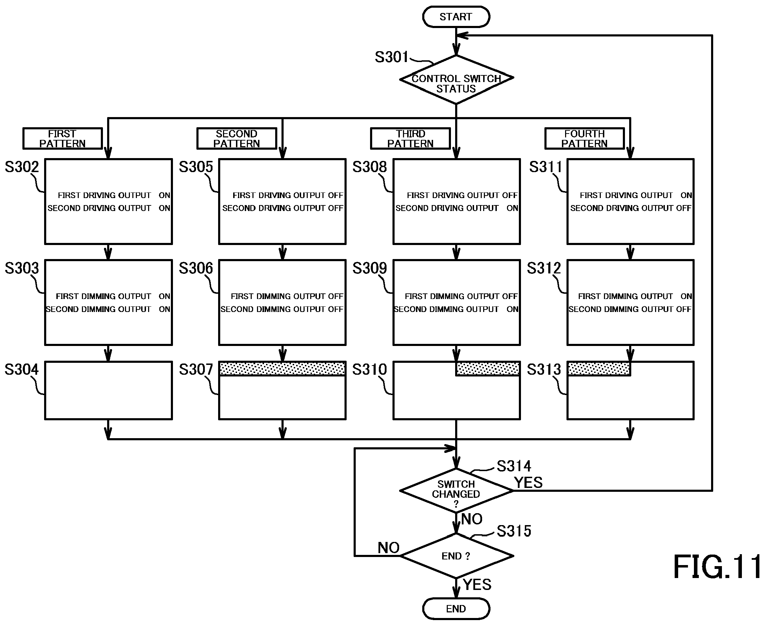

Fig. 11 shows a schematic flowchart of a flow of a control process which is performed in the dimming glass control device according to Fig. 8.

The control process as shown in this flowchart is started by switching the power supply to the dimming glass control device 300. Once the process has been started, it is first determined in the control section 320 to which of the first to fourth patterns Pt31 to Pt34 the control switch 340 is set (step S301).

If the control switch 340 is set to the first pattern Pt31, the control section 320 sets all of the first driving output Sg31 and second driving output Sg32 for the first AC voltage generating section 311 and second AC voltage generating section 312 to an on-state (step S302). In this manner, all of the first dimming output Vac-31 and second dimming output Vac-32 are switched on in the voltage applying section 310 (step S303). As a result, the dimming glass 31 is set to the first pattern Pt31 in which both of the first dimming film 31b-1 and second dimming film 31b-2 are transparent (step S304).

If the control switch 340 is set to the second pattern Pt32, the control section 320 sets all of the first driving output Sg31 and second driving output Sg32 to an off-state (step S305). In this manner, all of the first dimming output Vac-31 and second dimming output Vac-32 are switched off (step S306). As a result, the dimming glass 31 is set to the second pattern Pt32 in which both of the first dimming film 31b-1 and second dimming film 31b-2 are non-transparent (step S307).

If the control switch 340 is set to the third pattern Pt33, the control section 320 sets the first driving output Sg31 to an off-state, and sets the second driving output Sg32 to an on-state (step S308). In this manner, the first dimming output Vac-31 is switched off, while the second dimming output Vac-32 is switched on (step S309). As a result, the dimming glass 31 is set to the third pattern Pt33 in which the first dimming film 31b-1 on the driver seat side is non-transparent, wherein the second dimming film 31b-2 on the passenger seat side is transparent (step S310).

If the control switch 340 is set to the fourth pattern Pt34, the control section 320 sets the first driving output Sg31 to an on-state, and sets the second driving output Sg32 to an off-state (step S311). In this manner, the first dimming output Vac-31 is switched on, while the second dimming output Vac-32 is switched off (step S312). As a result, the dimming glass 31 is set to the fourth pattern Pt34 in which the first dimming film 31b-1 on the driver seat side is transparent, wherein the second dimming film 31b-2 on the passenger seat side is non-transparent (step S313).

After the dimming glass 31 is set to one dimming pattern in this manner, the control section 320 determines whether a switch change for switching the dimming pattern to another pattern has been carried out at the control switch 340 (step S314). If the switch change has been carried out (YES-determination in step S314), the process returns to step S301 and the following processes are repeated. If the switch change has not been carried out (NO-determination in step S314), the control section 320 determines whether it has been instructed that the process should be ended by a power supply shutdown (step S315). If such ending is not instructed (NO-determination in step S315), the process returns to step S314 and the following process is repeated. If the ending has been instructed (YES-determination in step S315), the control section 320 ends the control process according to this flowchart.

Of course, the dimming glass control device 300 and dimming control system 3 according to the third embodiment as described above enables the dimming glass 31 to be controlled while improving the user friendliness in a similar manner to the first embodiment.

According to the present embodiment, the dimming glass 31 includes two dimming films arranged on a upper end side of the windshield 31a of the vehicle, wherein four dimming patterns are provided which include all of the following first to fourth patterns Pt31 to Pt34: the first pattern Pt31 is a full dimming pattern in which the AC voltage is applied to all of two dimming films, i.e. the first dimming film 31b-1 on the driver seat side and the second dimming film 31b-2 on the passenger seat side. The second pattern Pt32 is a non-dimming pattern in which the AC voltage is not applied to any of the two dimming films. The third pattern Pt33 is a passenger seat side dimming pattern in which the AC voltage is applied to the second dimming film 31b-2 on the passenger seat side. The fourth pattern Pt34 is a driver seat side dimming pattern in which the AC voltage is applied to the first dimming film 31b-1 on the driver seat side.

Although full blocking is not acceptable for a windshield 31a of a vehicle, there is a high demand for partial blocking on the upper end side for the purpose of preventing glare. According to the above-described configuration, all of the full dimming pattern, non-dimming pattern, driver seat side dimming pattern, and passenger seat side dimming pattern are applied - as dimming patterns to be designated - to the upper end side of the windshield 31a. These dimming patterns are highly desired for users on driver seats and passenger seats which are facing the windshield 31a, and thus expected to be designated by such users with a high likelihood. According to the configuration as described above, at least one dimming pattern of such dimming patterns is set as a dimming pattern for designation, which enables the user friendliness to be further improved.

It is to be noted that the first to third embodiments as described above merely show representative embodiments and the present invention is not limited thereto. This means that various modifications may be implemented within the scope of the present invention as defined by the appended claims.

For example, although as examples for the dimming films, the first to third embodiments show dimming films having a transmittance which is substantially 100 %, i.e. transparent, when applying an AC voltage, and substantially 0 %, i.e. non-transparent, without voltage application, as shown in Fig. 3, the dimming films are not limited thereto. Unlike the example according to Fig. 3, they may be non-transparent when applying the AC voltage, and transparent without voltage application. Furthermore, the change of transmittance depending on AC voltage application is not limited to a change between substantially 100 % and substantially 0 %, but specific values of the transmittance may be configured in any appropriate manner as long as the transmittance is changed depending on the application. Furthermore, although as an example of the AC voltage for changing the transmittance, an AC voltage of ± 50 V and 50 Hz to 60 Hz has been shown, specific amplitude values and/or frequency of the AC voltage may be also configured in an appropriate manner.

Further, the first and second embodiments show the dimming glass 11 with the first to sixth dimming films 11b-1 to 11b-6 as an example for the dimming glass, wherein the first to sixth dimming films 11b-1 to 11b-6 are positioned in six regions of the window glass 11a which are obtained by dividing the window glass 11a into six in the up-down direction D11. Furthermore, the third embodiment shows the dimming glass 31 with the first dimming film 31b-1 and second dimming film 31b-2 by way of example, wherein the first dimming film 31b-1 and second dimming film 31b-2 are arranged in two regions of the windshield 31a which are obtained by dividing the upper end side of the windshield 31a into two regions on the driver seat side and passenger seat side with the vehicle width direction D32. However, the dimming glass is not limited thereto, but a direction of arrangement and the number of dimming films to be arranged on the dimming glass may be configured in any appropriate manner. For example, a plurality of dimming films may be positioned in a plurality of regions of a window glass other than a windshield, the regions being obtained by dividing the window glass in the vehicle width direction, and/or a plurality of dimming films may be positioned in regions obtained by dividing the window glass in a lattice shape. In the case of lattice-shaped arrangement, e.g. a dimming pattern such as a checked pattern may be provided. Furthermore, when a plurality of dimming films is arranged on the upper end side of a windshield, three or more dimming films may be arranged in the vehicle width direction in the case where the driver seat side and/or passenger seat side may be provided. Additionally or alternatively, it is conceivable that a plurality of dimming films is positioned in regions which are obtained by dividing the upper end side of the windshield in a lattice shape, wherein the dimming pattern such as a checked pattern may be provided on the upper end side of the windshield.

As examples for the dimming patterns which can be set, the first and second embodiments further show the first to fifth dimming patterns Pt1 to Pt5 including the full dimming pattern, non-dimming pattern, continuous dimming patterns and discontinuous dimming pattern. In addition, two patterns have been shown as examples for continuous dimming patterns, i.e., the second pattern Pt2 with AC voltage application to the dimming films in the lower half of the window glass 11a, and the third pattern Pt3 with AC voltage application to the dimming films in the upper half of the window glass 11a. As an example for the discontinuous dimming pattern, as covered by the subject-matter of claim 1, one pattern has been shown above, i.e., the fourth pattern Pt4 in which the AC voltage is applied to every second dimming film, totally three dimming films. However, the dimming patterns which can be set are not limited thereto, but any specific form of pattern may be used as long as a plurality of dimming patterns is provided which differs from each other in at least one of the number of dimming films or a position of a dimming film for AC voltage application. However, as described above, it is possible to further improve the user friendliness by applying the first to fifth dimming patterns Pt1 to Pt5. Here, it is to be noted that in the case where a plurality of dimming patterns including the full dimming pattern, non-dimming pattern, continuous dimming pattern(s) and discontinuous dimming pattern(s) can be set, it is sufficient that the dimming patterns include at least one discontinuous dimming pattern. Further, the continuous dimming pattern is not limited to the two patterns, but any specific form of pattern may be provided which is one or a plurality of patterns which differs from each other in at least one of the number or positions of dimming films forming a continuous film group. Likewise, the discontinuous dimming pattern is not limited to the one pattern, but any form of pattern may be provided which is another single pattern or a plurality of patterns which differs from each other in at least one of the number or positions of dimming films forming a discontinuous film group.

Furthermore, as examples for the dimming patterns which can be set for a windshield, the third embodiment shows the first to fourth dimming patterns Pt31 to Pt34 including the full dimming pattern, non-dimming pattern, driver seat side dimming pattern and passenger seat side dimming pattern. As an example for the driver seat side dimming pattern, the third embodiment further shows the fourth pattern Pt34 in which the AC voltage is applied to one dimming film on the driver seat side with respect to the vehicle width direction D32, i.e. the first dimming film 31b-1. As an example for the passenger seat side dimming pattern, the third embodiment further shows the third pattern Pt33 in which the AC voltage is applied to one dimming film on the passenger seat side with respect to the vehicle width direction D32, i.e. the second dimming film 31b-2. However, the dimming patterns which can be set for a windshield are not limited thereto, but any specific form of pattern may be used as long as a plurality of dimming patterns is provided which differs from each other in at least one of the number of dimming films or a position of a dimming film for AC voltage application. However, as described above, it is possible to further improve the user friendliness by applying the first to fourth dimming patterns Pt31 to Pt34 for a windshield. Here, it is to be noted that in the case where a plurality of dimming patterns including the full dimming pattern, non-dimming pattern, driver seat side dimming pattern and passenger seat side dimming pattern can be set, it is sufficient that the dimming patterns include at least one of these specific dimming patterns. Furthermore, the driver seat side dimming pattern may be a pattern in which the AC voltage is applied to a plurality of dimming films arranged on the driver seat side. Likewise, the passenger seat side dimming pattern may be a pattern in which the AC voltage is applied to a plurality of dimming films arranged on the passenger seat side.

Furthermore, as examples for the control section, the first to third embodiments show the control section 120, 220, 320 for which one dimming pattern of the plurality of dimming patterns is designated via operation by a passenger of a vehicle so as to be switchable. However, the control section is not limited thereto, but may be configured such that a dimming pattern is designated automatically under some setting condition without passenger operation. However, as described above, the control section 120, 220, 320 is preferable for which a dimming pattern is designated via operation by a passenger, since the dimming patterns can be easily switched.

Further, as examples for the voltage applying section and control section, the first and third embodiments show the voltage applying section 110, 310 and control section 120, 320, wherein the voltage applying section 110, 310 includes a plurality of AC voltage generating sections, and the control section 120, 320 is configured to operate only an AC voltage generating section which associated with the designated pattern. However, the voltage applying section and control section are not limited thereto, but may be e.g. the voltage applying section 210 with one AC voltage generating section and a plurality of relays as well as the control section 220 which brings only a relay associated with the designated pattern into a conductive state, as the second embodiment. However, as described above, it is possible to apply the AC voltage with high accuracy by the voltage applying section 110, 310 with a plurality of AC voltage generating sections and by the control section 120, 320 configured to control such AC voltage generating sections.

Furthermore, as examples for the voltage applying section and control section, the second embodiment shows the voltage applying section 210 with one AC voltage generating section and a plurality of relays as well as the control section 220 which brings only a relay associated with the designated pattern into a conductive state. However, the voltage applying section and control section are not limited thereto. The voltage applying section and control section may be e.g. the AC voltage generating section 110, 310 with a plurality of AC voltage generating sections as well as the control section 120, 320 which operates only an AC voltage generating section associated to the designated pattern, similarly to the first and third embodiments. However, as described above, it is possible to construct a dimming glass control device with less costs by the voltage applying section 210 with one AC voltage generating section and a plurality of relays and by the control section 220 configured to control such a voltage applying section 210.

### Reference Signs List

- 1, 2, 3: Dimming control system
- 11, 31: Dimming glass
- 11a: Window glass
- 11a-1, 31a-1: First regions
- 11a-2, 31a-2: Second regions
- 11a-3: Third regions
- 11a-4: Fourth regions
- 11a-5: Fifth regions
- 11a-6: Sixth regions
- 11b-1, 31b-1: First dimming film
- 11b-2, 31b-2: Second dimming film
- 11b-3: Third dimming film
- 11b-4: Fourth dimming film
- 11b-5: Fifth dimming film
- 11b-6: Sixth dimming film
- 11c, 31c: Glass panes
- 11d, 31d: Electric wires
- 31a: Windshield
- 100, 200, 300: Dimming glass control device
- 110, 210, 310: Voltage applying section
- 111, 311: First AC voltage generating section
- 112, 312: Second AC voltage generating section
- 113: Third AC voltage generating section
- 114: Fourth AC voltage generating section
- 115: Fifth AC voltage generating section
- 116: Sixth AC voltage generating section
- 120, 220, 320: Control section
- 130, 330: Battery
- 140, 340: Control switch
- 210a: AC voltage generating section
- 211: First relay
- 212: Second relay
- 213: Third relay
- 214: Fourth relay
- 215: Fifth relay
- 216: Sixth relay
- D11, D31: Up-down direction
- D32: Vehicle width direction
- L31, L32: Vertical width
- Sg1, Sg31: First driving output
- Sg2, Sg32: Second driving output
- Sg3: Third driving output
- Sg4: Fourth driving output
- Sg5: Fifth driving output
- Sg6: Sixth driving output
- Pt1, Pt31: First pattern
- Pt2, Pt32: Second pattern
- Pt3, Pt33: Third pattern
- Pt4, Pt34: Fourth pattern
- Pt5: Fifth pattern
- Vac-1, Vac-31: First dimming output
- Vac-2, Vac-32: Second dimming output
- Vac-3: Third dimming output
- Vac-4: Fourth dimming output
- Vac-5: Fifth dimming output
- Vac-6: Sixth dimming output

## Claims

1. A dimming glass control device (100; 200; 300) for a dimming glass, the dimming glass including a plurality of dimming films (11b-1 to 11b-6; 31b-1, 31b-2) arranged in different regions (11a-1 to 11a-6; 31a-1, 31a-2) of a window glass (11a; 31a) for a vehicle, wherein the plurality of dimming films (11b-1 to 11b-6; 31b-1, 31b-2) has transmittances of light which are changed depending on application of an AC voltage, the dimming glass (11; 31) control device comprising:
a voltage applying section (110; 210; 310) configured to change the transmittances of the plurality of dimming films (11b-1 to 11b-6; 31b-1, 31b-2) respectively by application and non-application of the AC voltage to each of the plurality of dimming films (11b-1 to 11b-6; 31b-1, 31b-2); and
a control section (120; 220; 320);
wherein the control section (120; 220; 320) is configured to, in response to designation of one dimming pattern of a plurality of dimming patterns, control the voltage applying section (110; 210; 310) so as to apply the AC voltage to one or more of the plurality of dimming films (11b-1 to 11b-6; 31b-1, 31b-2) associated with the one dimming pattern, wherein the plurality of dimming patterns differs from each other in at least one of a number of dimming films to which the AC voltage is applied or the position of a dimming film (11b-1 to 11b-6; 31b-1, 31b-2) in the dimming glass (11; 31) to which the AC voltage is applied, and
wherein the plurality of dimming patterns includes a discontinuous dimming pattern (Pt4) in which the AC voltage is applied to a discontinuous film group, the discontinuous film group being formed by two or more of the plurality of dimming films (11b-1 to 11b-6) which are arranged discontinuously with another dimming film (11b-1, 11b-3, 11b-5) interposed between the two or more of the plurality of dimming films (11b-1, 11b-3, 11b-5) of the discontinuous film group, wherein no voltage is applied to the another dimming film (11b-1, 11b-3, 11b-5), such that non-transparent dimming films alternate with a transparent dimming film.

2. The dimming glass control device (100; 200) according to claim 1,
wherein the plurality of dimming patterns further includes at least one of the following dimming patterns:
a full transparent pattern (Pt5) in which the AC voltage is applied to all of the plurality of dimming films (11b-1 to 11b-6);
a full blocking pattern (Pt1) in which the AC voltage is not applied to any of the plurality of dimming films (11b-1 to 11b-6); and
a continuous dimming pattern (Pt2, Pt3) in which the AC voltage is applied to a continuous film group, the continuous film group being formed by two or more of the plurality of dimming films (11b-1 to 11b-6) which are arranged continuously such that no other dimming film (11b-1 to 11b-6) is interposed between them.

3. The dimming glass control device (300) according to claim 1,
wherein the plurality of dimming films (31b-1, 31b-2) of the dimming glass (31) is arranged on an upper end side of a windshield (31a) for the vehicle,
wherein the plurality of dimming patterns further includes at least one of the following dimming patterns:
a full transparent pattern (Pt31) in which the AC voltage is applied to all of the plurality of dimming films (31b-1, 31b-2);
a full blocking pattern (Pt32) in which the AC voltage is not applied to any of the plurality of dimming films (31b-1, 31b-2);
a driver seat side dimming pattern (Pt34) in which the AC voltage is applied to one or more of the plurality of dimming films (31b-1) located on a driver seat side; and
a passenger seat side dimming pattern (Pt33) in which the AC voltage is applied to one or more of the plurality of dimming films (31b-2) located on a passenger seat side.

4. The dimming glass control device (100; 200; 300) according to any one of claims 1 to 3,
which is configured such that the designation of the one dimming pattern is provided via operation by a passenger of the vehicle.

5. The dimming glass control device (100; 300) according to any one of claims 1 to 4,
wherein the voltage applying section (110; 310) includes a plurality of AC voltage generating sections (111 to 116; 311, 312), each of the plurality of AC voltage generating sections (111 to 116; 311, 312) being configured to generate an AC voltage, wherein the plurality of AC voltage generating sections (111 to 116; 311, 312) is associated with the plurality of dimming films (11b-1 to 11b-6; 31b-1, 31b-2) in a one-to-one manner, and wherein the control section (120; 220; 320) is configured to control the plurality of AC voltage generating sections (111 to 116; 311, 312) in such a manner that only one or more of the plurality of AC voltage generating sections (111 to 116; 311, 312) associated with the one dimming pattern which has been designated generates the AC voltage.

6. The dimming glass control device (200) according to any one of claims 1 to 4,
wherein the voltage applying section (210) includes a plurality of relays (211 to 216) and one AC voltage generating section (210a) configured to output the AC voltage, wherein the plurality of relays (211 to 216) is associated with the plurality of dimming films (11b-1 to 11b-6; 31b-1, 31b-2) in a one-to-one manner and configured to connect each of the plurality of dimming films (11b-1 to 11b-6; 31b-1, 31b-2) to the AC voltage generating section (210a),
wherein the control section (120; 220; 320) is configured to control the plurality of relays (211 to 216) in such a manner that only one or more of the plurality of relays (211 to 216) associated with the one dimming pattern which has been designated is switched to a conductive state.

7. A dimming control system (1; 2; 3) comprising:
a dimming glass (11; 31) including a plurality of dimming films (11b-1 to 11b-6; 31b-1, 31b-2), wherein the plurality of dimming films (11b-1 to 11b-6; 31b-1, 31b-2) is arranged in different regions (11a-1 to 11a-6; 31a-1, 31a-2) of a window glass (11a; 31a) for a vehicle, wherein the plurality of dimming films (11b-1 to 11b-6; 31b-1, 31b-2) has transmittances of light which are changed depending on application of an AC voltage; and
the dimming glass control device (100; 200; 300) according to any one of claims 1 to 6 configured to control the transmittances of the plurality of dimming films (11b-1 to 11b-6; 31b-1, 31b-2) of the dimming glass (11; 31).

## Patentansprüche

1. Dimmscheiben-Steuervorrichtung (100; 200; 300) für eine Dimmscheibe, wobei die Dimmscheibe mehrere Dimmschichten (11b-1 bis 11b-6; 31b-1, 31b-2) aufweist, die in unterschiedlichen Gebieten (11a-1 bis 11a-6; 31a-1, 31a-2) eines Fensterglases (11a; 31a) für ein Fahrzeug angeordnet sind, wobei die mehreren Dimmschichten (11b-1 bis 11b-6; 31b-1, 31b-2) Lichtdurchlässigkeiten aufweisen, die in Abhängigkeit vom Anlegen einer Wechselspannung geändert werden, wobei die Dimmscheiben (11; 31)-Steuervorrichtung aufweist:
einen Spannungsanlegungsabschnitt (110; 210; 310), der ausgebildet ist, die Durchlässigkeiten der mehreren Dimmschichten (11b-1 bis 11b-6; 31b-1, 31b-2) durch Anlegen bzw. Nichtanlegen der Wechselspannung an jede der mehreren Dimmschichten (11b-1 bis 11b-6; 31b-1, 31b-2) zu ändern; und
einen Steuerungsabschnitt (120; 220; 320);
wobei der Steuerungsabschnitt (120; 220; 320) ausgebildet ist, in Reaktion auf die Zuweisung eines von mehreren Dimmmustern den Spannungsanlegungsabschnitt (110; 210; 310) derart zu steuern, dass die Wechselspannung an eine oder einige der mehreren Dimmschichten (11b-1 bis 11b-6; 31b-1, 31b-2), die dem einen Dimmmuster zugeordnet sind, angelegt wird, wobei die mehreren Dimmmuster sich in einer Anzahl an Dimmschichten, an die die Wechselspannung angelegt wird, und/oder in der Position einer Dimmschicht (11b-1 bis 11b-6; 31b-1, 31b-2) in der Dimmscheibe (11; 31), an die die Wechselspannung angelegt wird, unterscheiden und
wobei die mehreren Dimmmuster ein diskontinuierliches Dimmmuster (Pt4) enthalten, in welchem die Wechselspannung an eine diskontinuierliche Schichtgruppe angelegt wird, wobei die diskontinuierliche Schichtgruppe aus zwei oder mehr der mehreren Dimmschichten (11b-1 bis 11b-6) gebildet ist, die diskontinuierlich an einer weiteren Dimmschicht (11b-1, 11b-3, 11b-5) angeordnet sind, die zwischen den zwei oder mehr der mehreren Dimmschichten (11b-1, 11b-3, 11b-5) der diskontinuierlichen Schichtgruppe liegt, wobei an die weitere Dimmschicht (11b-1, 11b-3, 11b-5) eine Spannung angelegt wird derart, dass nicht-transparente Dimmschichten sich mit einer transparenten Dimmschicht abwechseln.

2. Dimmscheiben-Steuervorrichtung (100; 200) nach Anspruch 1,
wobei die mehreren Dimmmuster ferner mindestens eines der folgenden Dimmmuster enthalten:
ein volles transparentes Muster (Pt5), bei welchem die Wechselspannung an alle Dimmschichten der mehreren Dimmschichten (11b-1 bis 11b-6) angelegt ist;
ein volles Sperrmuster (Pt1), bei welchem die Wechselspannung an keine der mehreren Dimmschichten (11b-1 bis 11b-6) angelegt ist; und
ein kontinuierliches Dimmmuster (Pt2, Pt3), bei welchem die Wechselspannung an eine kontinuierliche Schichtgruppe angelegt ist, wobei die kontinuierliche Schichtgruppe aus zwei oder mehr der mehreren Dimmschichten (11b-1 bis 11b-6) gebildet ist, die kontinuierlich so angeordnet sind, dass keine andere Dimmschicht (11b-1 bis 11b-6) dazwischenliegt.

3. Dimmscheiben-Steuervorrichtung (300) nach Anspruch 1,
wobei die mehreren Dimmschichten (31b-1, 31b-2) der Dimmscheibe (31) auf einer oberen Endseite einer Frontscheibe (31a) für das Fahrzeug angeordnet sind,
wobei die mehreren Dimmmuster ferner mindestens eines der folgenden Dimmmuster enthalten:
ein volles transparentes Muster (Pt31), bei welchem die Wechselspannung an alle Dimmschichten der mehreren Dimmschichten (31b-1, 31b-2) angelegt ist;
ein volles Sperrmuster (Pt32), bei welchem die Wechselspannung an eine der mehreren Dimmschichten (31b-1, 31b-2) angelegt ist;
ein fahrersitzseitiges Dimmmuster (Pt34), bei welchem die Wechselspannung an eine oder mehr der mehreren Dimmschichten (31b-1), die auf einer Fahrersitzseite angeordnet ist, angelegt ist; und
ein fahrgastsitzseitiges Dimmmuster (Pt33), bei welchem die Wechselspannung an eine oder mehr der mehreren Dimmschichten (31b-2), die auf einer Fahrgastsitzseite liegt, angelegt ist.

4. Dimmscheiben-Steuervorrichtung (100; 200; 300) nach einem der Ansprüche 1 bis 3, die derart ausgebildet ist, dass die Zuweisung des einen Dimmmusters durch Einwirkung eines Passagiers des Fahrzeugs erfolgt.

5. Dimmscheiben-Steuervorrichtung (100; 300) nach einem der Ansprüche 1 bis 4, wobei der Spannungsanlegungsabschnitt (110; 310) mehrere Wechselspannungs-Erzeugungsabschnitte (111 bis 116; 311, 312) aufweist, wobei jeder der mehreren Wechselspannungs-Erzeugungsabschnitte (111 bis 116; 311, 312) ausgebildet ist, eine Wechselspannung zu erzeugen, wobei die mehreren Wechselspannungs-Erzeugungsabschnitte (111 bis 116; 311, 312) den mehreren Dimmschichten (11b-1 bis 11b-6; 31b-1, 31b-2) Eins-zu-Eins zugeordnet sind, und wobei der Steuerungsabschnitt (120; 220; 320) ausgebildet ist, die mehreren Wechselspannungs-Erzeugungsabschnitte (111 bis 116; 311, 312) derart zu steuern, dass nur einer oder einige der mehreren Wechselspannungs-Erzeugungsabschnitte (111 bis 116; 311, 312), die dem einen Dimmmuster, das zugewiesen worden ist, zugeordnet sind, die Wechselspannung erzeugen.

6. Dimmscheiben-Steuervorrichtung (200) nach einem der Ansprüche 1 bis 4,
wobei der Spannungsanlegungsabschnitt (210) mehrere Relais (211 bis 216) und einen einzelnen Wechselspannungs-Erzeugungsabschnitt (210a) aufweist, der ausgebildet ist, die Wechselspannung auszugeben, wobei die mehreren Relais (211 bis 216) den mehreren Dimmschichten (11b-1 bis 11b-6; 31b-1, 31b-2) Eins-zu-Eins zugeordnet und ausgebildet sind, jeweils die mehreren Dimmschichten (11b-1 bis 11b-6; 31b-1, 31b-2) mit dem Wechselspannungs-Erzeugungsabschnitt (210a) zu verbinden,
wobei der Steuerungsabschnitt (120; 220; 320) ausgebildet ist, die mehreren Relais (211 bis 216) derart zu steuern, dass nur ein oder einige der mehreren Relais (211 bis 216), die dem einen Dimmmuster, das zugewiesen worden ist, zugeordnet sind, in einen leitenden Zustand geschaltet werden.

7. Dimmsteuerungssystem (1; 2; 3), mit:
einer Dimmscheibe (11; 31) mit mehreren Dimmschichten (11b-1 bis 11b-6; 31b-1, 31b-2), wobei die mehreren Dimmschichten (11b-1 bis 11b-6; 31b-1, 31b-2) in unterschiedlichen Gebieten (11a-1 bis 11a-6; 31a-1, 31a-2) eines Fensterglases (11a; 31a) für ein Fahrzeug angeordnet sind, wobei die mehreren Dimmschichten (11b-1 bis 11b-6; 31b-1, 31b-2) Lichtdurchlässigkeiten haben, die in Abhängigkeit einer Wechselspannung geändert werden; und
einer Dimmscheiben-Steuervorrichtung (100; 200; 300) nach einem der Ansprüche 1 bis 6, die ausgebildet ist, die Durchlässigkeiten der mehreren Dimmschichten (11b-1 bis 11b-6; 31b-1, 31b-2) der Dimmscheibe (11; 31) zu steuern.

## Revendications

1. Dispositif de contrôle de verre à teinte variable (100 ; 200 ; 300) pour un verre à teinte variable, le verre à teinte variable comprenant une pluralité de films à teinte variable (11b-1 à 11b-6 ; 31b-1, 31b-2) agencés dans différentes régions (11a-1 à 11a-6 ; 31a-1, 31a-2) d'un verre de fenêtre (11a ; 31a) pour véhicule, dans lequel les transmittances de lumière de la pluralité de films à teinte variable (11b-1 à 11b-6 ; 31b-1, 31b-2) sont modifiées en fonction de l'application d'une tension alternative, le dispositif de contrôle de verre à teinte variable (11 ; 31) comprenant :
une section d'application de tension (110 ; 210 ; 310) configurée pour modifier les transmittances de la pluralité de films à teinte variable (11b-1 à 11b-6 ; 31b-1, 31b-2) respectivement par application et non-application de la tension alternative à chaque film de la pluralité de films à teinte variable (11b-1 à 11b-6 ; 31b-1, 31b-2) ; et
une section de contrôle (120 ; 220 ; 320) ;
dans lequel la section de contrôle (120 ; 220 ; 320) est configurée pour, en réponse à la désignation d'un motif parmi une pluralité de motifs de variation de teinte, contrôler la section d'application de tension (110 ; 210 ; 310) de manière à appliquer la tension alternative à un ou plusieurs films de la pluralité de films à teinte variable (11b-1 à 11b-6 ; 31b-1, 31b-2) associés audit motif de variation de teinte, dans lequel la pluralité de motifs de variation de teinte diffèrent entre eux par au moins un film d'un certain nombre de films à teinte variable auxquels la tension alternative est appliquée ou par la position d'un film à teinte variable (11b-1 à 11b-6 ; 31b-1, 31b-2) dans le verre à teinte variable (11 ; 31) auquel la tension alternative est appliquée, et
dans lequel la pluralité de motifs de variation de teinte comprend un motif de variation de teinte discontinu (Pt4) dans lequel la tension alternative est appliquée à un groupe de films discontinus, le groupe de films discontinus étant constitué par deux ou plusieurs films de la pluralité de films à teinte variable (11b-1 à 11b-6) qui sont agencés de manière discontinue avec un autre film à teinte variable (11b-1, 11b-3, 11b-5) interposé entre les deux ou plusieurs films de la pluralité de films à teinte variable (11b-1, 11b-3, 11b-5) du groupe de films discontinus,
dans lequel aucune tension n'est appliquée audit autre film à teinte variable (11b-1, 11b-3, 11b-5), de telle sorte que des films à teinte variable non transparents alternent avec un film à teinte variable transparent.

2. Dispositif de contrôle de verre à teinte variable (100 ; 200) selon la revendication 1,
dans lequel la pluralité de motifs de variation de teinte comprend en outre au moins l'un des motifs de variation de teinte suivants :
un motif entièrement transparent (Pt5) dans lequel la tension alternative est appliquée à tous les films de la pluralité de films à teinte variable (11b-1 à 11b-6) ;
un motif entièrement bloquant (Pt1) dans lequel la tension alternative n'est appliquée à aucun film de la pluralité de films à teinte variable (11b-1 à 11b-6) ; et
un motif de variation de teinte continu (Pt2, Pt3) dans lequel la tension alternative est appliquée à un groupe de films continus, le groupe de films continus étant constitué de deux ou plusieurs films de la pluralité de films à teinte variable (11b-1 à 11b-6) qui sont agencés en continu de telle sorte qu'aucun autre film à teinte variable (11b-1 à 11b-6) n'est interposé entre eux.

3. Dispositif de contrôle de verre à teinte variable (300) selon la revendication 1,
dans lequel la pluralité de films à teinte variable (31b-1, 31b-2) du verre à teinte variable (31) est agencée sur un côté d'extrémité supérieure d'un pare-brise (31a) pour le véhicule,
dans lequel la pluralité de motifs de variation de teinte comprend en outre au moins l'un des motifs de variation de teinte suivants :
un motif entièrement transparent (Pt31) dans lequel la tension alternative est appliquée à tous les films de la pluralité de films à teinte variable (31b-1, 31b-2) ;
un motif entièrement bloquant (Pt32) dans lequel la tension alternative n'est appliquée à aucun film de la pluralité de films à teinte variable (31b-1, 31b-2) ;
un motif de variation de teinte côté siège conducteur (Pt34) dans lequel la tension alternative est appliquée à un ou plusieurs films de la pluralité de films à teinte variable (31b-1) situés d'un côté siège conducteur ; et
un motif de variation de teinte côté siège passager (Pt33) dans lequel la tension alternative est appliquée à un ou plusieurs films de la pluralité de films à teinte variable (31b-2) situés d'un côté siège passager.

4. Dispositif de contrôle de verre à teinte variable (100 ; 200 ; 300) selon l'une quelconque des revendications 1 à 3,
configuré de telle sorte que la désignation dudit motif de variation de teinte est effectuée via un actionnement par un passager du véhicule.

5. Dispositif de contrôle de verre à teinte variable (100 ; 300) selon l'une quelconque des revendications 1 à 4,
dans lequel la section d'application de tension (110 ; 310) comprend une pluralité de sections de génération de tension alternative (111 à 116 ; 311, 312), chaque section de la pluralité de sections de génération de tension alternative (111 à 116 ; 311, 312) étant configurée pour générer une tension alternative, dans lequel la pluralité de sections de génération de tension alternative (111 à 116 ; 311, 312) est associée à la pluralité de films à teinte variable (11b-1 à 11b-6 ; 31b-1, 31b-2) de manière biunivoque, et
dans lequel la section de contrôle (120 ; 220 ; 320) est configurée pour contrôler la pluralité de sections de génération de tension alternative (111 à 116 ; 311, 312) de telle manière qu'une ou plusieurs sections seulement de la pluralité de sections de génération de tension alternative (111 à 116 ; 311, 312) associées audit motif de variation de teinte qui a été désigné génèrent la tension alternative.

6. Dispositif de contrôle de verre à teinte variable (200) selon l'une quelconque des revendications 1 à 4,
dans lequel la section d'application de tension (210) comprend une pluralité de relais (211 à 216) et une section de génération de tension alternative (210a) configurée pour fournir la tension alternative, dans lequel la pluralité de relais (211 à 216) est associée à la pluralité de films à teinte variable (11b-1 à 11b-6 ; 31b-1, 31b-2) de manière biunivoque et est configurée pour connecter chaque film de la pluralité de films à teinte variable (11b-1 à 11b-6 ; 31b-1, 31b-2) à la section de génération de tension alternative (210a),
dans lequel la section de contrôle (120 ; 220 ; 320) est configurée pour contrôler la pluralité de relais (211 à 216) de telle manière qu'un ou plusieurs relais seulement de la pluralité de relais (211 à 216) associés audit motif de variation de teinte qui a été désigné sont commutés à un état conducteur.

7. Système de contrôle de variation de teinte (1 ; 2 ; 3) comprenant :
un verre à teinte variable (11 ; 31) comprenant une pluralité de films à teinte variable (11b-1 à 11b-6 ; 31b-1, 31b-2), dans lequel les films de la pluralité de films à teinte variable (11b-1 à 11b-6 ; 31b-1, 31b-2) sont agencés dans différentes régions (11a-1 à 11a-6 ; 31a-1, 31a-2) d'un verre de fenêtre (11a ; 31a) pour véhicule, dans lequel les transmittances de lumière de la pluralité de films à teinte variable (11b-1 à 11b-6 ; 31b-1, 31b-2) sont modifiées en fonction de l'application d'une tension alternative ; et
le dispositif de contrôle de verre à teinte variable (100 ; 200 ; 300) selon l'une quelconque des revendications 1 à 6 est configuré pour contrôler les transmittances de la pluralité de films à teinte variable (11b-1 à 11b-6 ; 31b-1, 31b-2) du verre à teinte variable (11 ; 31).
